# EUROPÄISCHE PATENTSCHRIFT

(11) **EP 3 000 645 B1**
(45) Veröffentlichungstag und Bekanntmachung des Hinweises auf die Patenterteilung: **03.04.2019**
(21) Anmeldenummer: 15182136.0
(22) Anmeldetag: 24.08.2015
(51) Int. Cl.: B60M 1/02, B60M 1/12, B60L 5/28, B61C 3/00

(54) **STROMABNEHMERANORDNUNG FÜR EIN FAHRZEUG**
COLLECTOR ASSEMBLY FOR A VEHICLE
INSTALLATION DE PRISES DE COURANT POUR UN VEHICULE

(30) Priorität: 26.09.2014 DE 102014219554
(43) Veröffentlichungstag der Anmeldung: 30.03.2016
(73) Patentinhaber: Siemens Mobility GmbH, 81739 München (DE)
(72) Erfinder: Dietrich, Klaus, 13051 Berlin (DE)

(56) Entgegenhaltungen:
- EP-A1- 2 340 958
- EP-B1- 2 296 931
- JP-A- 2011 166 961
- JP-Y1- S4 514 335
- US-A- 2 262 413

## Beschreibung

Die Erfindung betrifft eine Stromabnehmeranordnung für ein Fahrzeug, mit wenigstens einem zum zumindest zeitweisen Kontakt mit einem fahrzeugexternen elektrischen Netz ausgestalteten Stromabnehmer, der von einer Kontaktstellung in eine Ruhestellung bewegbar ausgestaltet ist, mit einem ersten fahrzeuginternen elektrischen Netz, das mit dem Stromabnehmer in der Kontaktstellung verbunden ist, und mit einem zweiten fahrzeuginternen elektrischen Netz, das mit einer Erdung oder Masse des Fahrzeugs und in der Ruhestellung mit dem Stromabnehmer verbunden ist.

Stromabnehmeranordnungen sind aus dem Stand der Technik bekannt und werden beispielsweise an Schienenfahrzeugen verwendet, um elektrische Energie aus einem fahrzeugexternen Energienetz zu beziehen.

Beispielsweise ist aus der JP 2011166961 A eine Stromabnehmeranordnung mit zwei Stromabnehmern bekannt.

In der EP 2 296 931 B1 ist eine Stromabnehmeranordnung beschrieben, die eine Trennereinrichtung umfasst, um die elektrische Verbindung zum externen Energienetz sicher zu trennen und den Stromabnehmer zu erden. Die Fahrzeuge mit bekannten Stromabnehmeranordnungen können auch interne Energiequellen, beispielsweise einen Energiespeicher oder Generator, aufweisen. Dadurch können die Stromabnehmer auch in ihrer Ruhestellung, in der sie vom fahrzeugexternen Energienetz getrennt sind, unter Spannung stehen. Selbstverständlich wird die elektrische Verbindung zwischen dem Stromabnehmer und der fahrzeuginternen Energiequelle über einen Schütz oder ein Relais getrennt. Jedoch können diese Schaltmittel im defekten Zustand den Stromabnehmer unter Spannung belassen, was ein nicht hinzunehmendes Risiko bedeutet. Zwar stellt die Vorrichtung der EP 2 296 931 B1 auch in der Ruhestellung eine Trennung vom internen Netz sicher, aber diese ist konstruktiv aufwendig und dadurch kostenintensiv.

Es ist daher die Aufgabe der vorliegenden Erfindung eine Stromabnehmeranordnung der eingangs genannten Art bereitzustellen, die eine Spannungsfreiheit des Stromabnehmers in der Ruhestellung herstellt und konstruktiv einfach ausgestaltet ist.

Erfindungsgemäß wird die Aufgabe von der eingangs genannten Stromabnehmeranordnung dadurch gelöst, dass der Stromabnehmer in der Ruhestellung mit dem ersten und dem zweiten elektrischen Netz verbunden ist.

Die erfindungsgemäße Lösung hat den Vorteil, dass durch die Verbindung vom ersten und zweiten elektrischen Netz in der Ruhestellung auf sehr einfache Art und Weise eine Verbindung zur Erdung oder Masse des Fahrzeugs hergestellt wird. Ein fahrzeuginterner Energiespeicher ist beispielsweise mit dem ersten fahrzeuginternen Netz verbunden, so dass in der Ruhestellung ein Kurzschluss zwischen dem Energiespeicher und der Masse oder Erdung des Fahrzeugs entstehen würde, wenn ein Sicherungsschütz versagt und die Verbindung nicht getrennt ist. Die Gefahr, dass der Stromabnehmer in der Ruhestellung unter Spannung steht, kann ausgeschlossen werden.

Die Erfindung kann durch verschiedene vorteilhafte Ausgestaltungen weiterentwickelt werden, die im Folgenden beschrieben sind.

So kann der Stromabnehmer wenigstens ein Kontaktmittel und das zweite fahrzeuginterne Netz ein Gegenkontaktmittel aufweisen, die in der Ruhestellung miteinander verbunden und in der Kontaktstellung voneinander getrennt sind. Dies hat den Vorteil, dass die Verbindung zwischen dem ersten und dem zweiten elektrischen Netz besonders einfach hergestellt werden kann. Insbesondere kann das Kontaktmittel an einem sich zwischen Ruhestellung und Kontaktstellung bewegenden Abschnitt des Stromabnehmers angeordnet sein, um die sowieso vorhandene Bewegung des Stromabnehmers für die Verbindungsherstellung von Kontaktmittel und Gegenkontaktmittel auszunutzen. Durch die Bewegung der Stromabnehmeranordnung in die Ruhestellung wird der elektrische Kontakt zwischen dem ersten und dem zweiten internen Netz geschlossen. Hierdurch kann auf eine konstruktiv aufwendige Ausgestaltung oder einen separater Antrieb für die Verbindungsherstellung zwischen Kontaktmittel und Gegenkontaktmittel verzichtet werden.

Um die Ruhestellung des Stromabnehmers eindeutig identifizieren zu können, kann die Stromabnehmeranordnung wenigstens ein Schaltmittel aufweisen, wobei das Schaltmittel in der Kontaktstellung des Stromabnehmers einen ersten Schaltzustand und in der Ruhestellung des Stromabnehmers einen zweiten Schaltzustand annimmt. Das Schaltmittel kann beispielsweise ein Näherungsschalter, Reedschalter, Endschalter oder ähnliches sein, der die Ruhestellung des Stromabnehmers abfragt. Das Schaltmittel kann beispielsweise über die fahrzeuginterne Steuerung mit einem optischen oder akustischen Signal gekoppelt sein, das die Ruhestellung des Stromabnehmers anzeigt. In der Ruhestellung können Arbeiten in der Nähe des Stromabnehmers gefahrlos durchgeführt werden.

In einer vorteilhaften Weiterbildung kann die Stromabnehmeranordnung wenigstens ein Anzeigemittel aufweisen, wobei das Anzeigemittel in der Ruhestellung des Stromabnehmers einen ersten Anzeigezustand einnimmt, der sich von einem Anzeigezustand außerhalb der Ruhestellung unterscheidet. Die Stromabnehmeranordnung kann hierzu beispielsweise eine Markierung aufweisen, die von außerhalb des Fahrzeugs sichtbar ist und die ein Erreichen der Ruhestellung und damit den sicheren Zustand der Stromabnehmeranordnung anzeigt. Der Stromabnehmer kann beispielsweise seine Hubbewegung durch eine Linearführung realisieren, an der eine leicht einsehbare Markierung anbringbar ist, die das Erreichen der Ruhestellung anzeigt und die insbesondere außerhalb der Ruhestellung nicht erkennbar ist. Das Anzeigemittel kann insbesondere von außerhalb des Fahrzeugs einsehbar sein.

Ferner kann das erste fahrzeuginterne Netz zumindest zeitweise wenigstens mit einer fahrzeuginternen Energiequelle verbunden sein. Dies hat den Vorteil, dass das Fahrzeug unabhängig von der Stellung der Stromabnehmeranordnung angetrieben werden kann.

In einer vorteilhaften Ausgestaltung kann die Stromabnehmeranordnung wenigstens zwei zum Kontakt mit von einander verschiedenen fahrzeugexternen elektrischen Netzen ausgestaltete Stromabnehmer aufweisen, die in der Ruhestellung elektrisch miteinander verbunden sind. Fahrzeuge mit zwei Stromabnehmern werden insbesondere bei nicht schienengebundenen Fahrzeugen eingesetzt, die beide Pole über Stromabnehmer verbinden müssen. Bei schienengebundenen Fahrzeugen wird üblicherweise nur der Kontakt von einem Pol über einen Stromabnehmer hergestellt, weil die Erdung über die Verbindung der Räder mit der Schiene hergestellt wird. Diese Ausgestaltung hat den Vorteil, dass die Stromabnehmer in der Ruhestellung miteinander kurzgeschlossen und beide mit der Masse des Fahrzeugs verbunden sind. Hierdurch ist ein sicheres Arbeiten an den Stromabnehmern in der Ruhestellung gewährleistet.

Die Erfindung betrifft ferner ein Fahrzeug mit einer Stromabnehmeranordnung nach einer der zuvor genannten Ausführungsform.

In einer vorteilhaften Ausgestaltung kann das Fahrzeug als ein nicht schienengebundenes Fahrzeug ausgestaltet sein. Dies hat den Vorteil, dass bei nicht schienengebundenen Fahrzeugen, wie beispielsweise LKWs, die Gefahr eines Kontakts mit den Stromabnehmern in der Ruhestellung, beispielsweise beim Be- und Entladen, besonders groß ist und dadurch die erfindungsgemäß Lösung zu einem besonderen Vorteil führt.

Ferner kann das Fahrzeug als ein Hybridfahrzeug mit wenigstens zwei unterschiedlichen Energiewandlern ausgebildet sein. Beispielsweise kann das Fahrzeug einen Dieselmotor und auch einen Elektromotor aufweisen. Dem Dieselmotor kann ein Generator nachgeschaltet sein, der elektrische Energie zur Speisung des Elektromotors herstellt. In der Kontaktstellung kann der Elektromotor auch über ein fahrzeugexternes Energienetz betrieben werden.

Im Folgenden wird die Erfindung mit Bezug auf die beispielhaften Ausführungsformen in den beigefügten Zeichnungen erläutert.

Es zeigen:
- Figur 1: eine schematische Darstellung einer ersten Ausführungsform einer erfindungsgemäßen Stromabnehmeranordnung in einer Ruhestellung;
- Figur 2: Stromabnehmeranordnung aus Fig. 1 in einer Kontaktstellung;
- Figur 3: eine schematische Darstellung einer zweiten Ausführungsform einer erfindungsgemäßen Stromabnehmeranordnung in der Ruhestellung.

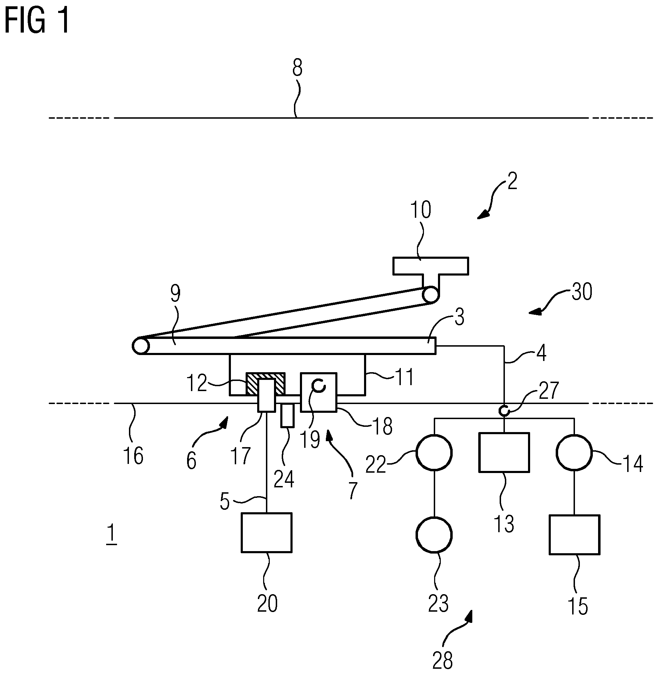

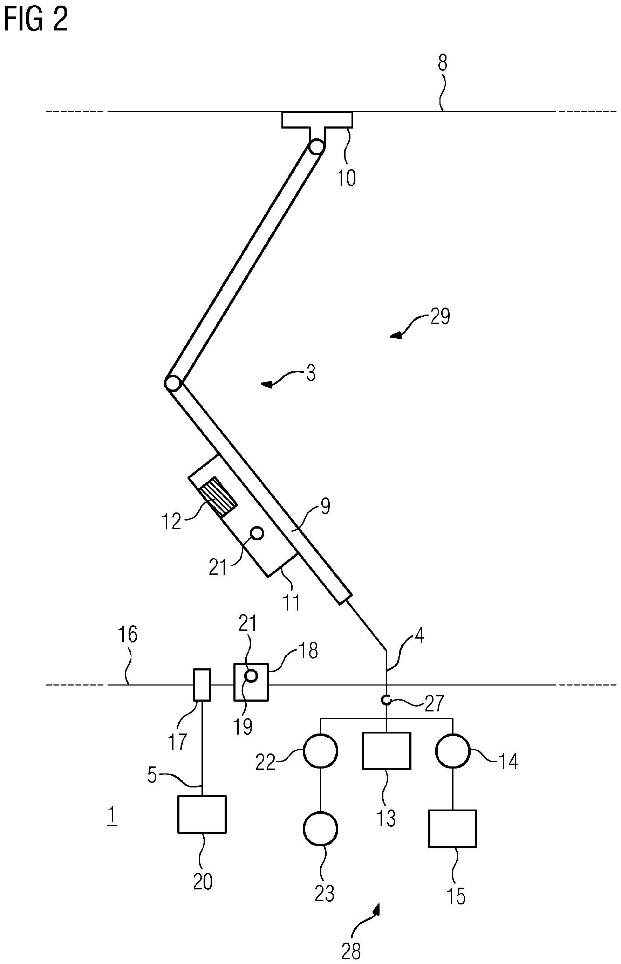

Zunächst wird die Erfindung mit Bezug auf die beispielhafte Ausführungsform der Figuren 1 und 2 beschrieben.

Figur 1 zeigt einen Teil eines Fahrzeugs 1 mit einer erfindungsgemäßen Stromabnehmeranordnung 2. Das Fahrzeug ist beispielsweise ein nicht schienengebundenes Fahrzeug wie ein LKW mit Hybridantrieb, der sowohl mit elektrischer Energie aus einem fahrzeugexternen elektrischen Netz 8 als auch mit chemischer Energie aus einem fossilen Brennstoff, wie beispielsweise Diesel oder Benzin, betrieben werden kann. Die Stromabnehmeranordnung umfasst wenigstens einen Stromabnehmer 3, ein erstes fahrzeuginternes elektrisches Netz 4, ein zweites fahrzeuginternes Netz 5, eine Kontaktbaugruppe 6 und eine Verriegelungsbaugruppe 7.

Der Stromabnehmer 3 ist lediglich schematisch und nur teilweise dargestellt und umfasst einen Stromabnehmerholm 9, einen Schleifkontakt 10, eine Verriegelungslasche 11 und eine Kontaktfläche 12. Die Verriegelungslasche ist mit dem Stromabnehmerholm 9 verbunden und an ihm befestigt. Die Kontaktfläche 12 ist an der Verriegelungslasche 11 angeordnet und mit dem Stromabnehmerholm 9 und dem Schleifkontakt 10 elektrisch verbunden. Der Schleifkontakt 10 ist weiterhin elektrisch mit dem ersten fahrzeuginternen Netz 4 verbunden. Das erste fahrzeuginterne Netz 4 umfasst einen fahrzeuginternen Energiespeicher 13, einen elektrischen Wandler 14 und einen Elektromotor 15. Energiespeicher 13, Wandler 14 und Elektromotor 15 sind Teil des Fahrzeugs 1, auf dessen Dach 16 die Stromabnehmeranordnung 2 angebracht ist. In Figur 1 ist der Stromabnehmer 3 in einer Ruhestellung dargestellt, in der der Schleifkontakt 10 von dem fahrzeugexternen Netz 8 entfernt und abgesenkt ist. Selbstverständlich umfasst der Stromabnehmer 3 in bekannter Weise einen Antrieb, durch den er von der Ruheposition in eine in Figur 2 dargestellte Kontaktstellung bringbar ist, und Befestigungs- bzw. Lagermittel (nicht dargestellt) zur Befestigung auf dem Fahrzeugdach 16.

Die Kontaktbaugruppe 6 weist einen Gegenkontakt 17 und die Kontaktfläche 12 auf. Die Verriegelungsbaugruppe 7 umfasst die Verriegelungslasche 11, eine Verriegelungsgabel 18 und einen Verriegelungsbolzen 19. Der Gegenkontakt 17 ist ortsfest mit dem Dach 16 des Fahrzeugs 1 verbunden und Teil des zweiten fahrzeuginternen Netzes 5. Das fahrzeuginterne Netz 5 ist weiterhin mit einer Erdung bzw. Masse 20 des Fahrzeugs 1 verbunden bzw. umfasst diese. Die Kontaktfläche 12 ist ortsfest mit dem Stromabnehmerholm 9 verbunden und somit relativ beweglich zum Gegenkontakt ausgebildet, da der Stromabnehmerholm 9 beweglich zum Fahrzeugdach 16 angeordnet ist. Die Kontaktfläche 12 ist lediglich eine mögliche Ausführung eines Kontaktmittels. Ähnlich wie der Gegenkontakt 17 ist auch die Verriegelungsgabel 18 ortsfest am Dach 16 des Fahrzeugs 1 angebracht. Die Verriegelungslasche 11 wiederum ist mit dem Stromabnehmerholm 9 verbunden und somit beweglich zum Fahrzeugdach 16 ausgebildet. Verriegelungsgabel 18 und Verriegelungslasche 11 sind komplementär zueinander ausgestaltet.

Figur 2 zeigt die erfindungsgemäße Stromabnehmeranordnung 2 aus Fig. 1 in einer Kontaktstellung 29, in welcher der Stromabnehmer 3 ausgefahren und der Schleifkontakt 10 in Kontakt mit dem fahrzeugexternen Netz 8 steht. Das fahrzeugexterne Netz 8 ist beispielsweise eine Oberleitung über einer nicht dargestellten Fahrstrecke. In der Kontaktstellung 29 in Figur 2 sind die Kontaktfläche 12 und der Gegenkontakt 17 der Kontaktbaugruppe 6 voneinander getrennt, so dass zwischen ihnen keine elektrische Verbindung besteht. Ebenfalls getrennt voneinander sind die Verriegelungslasche 11 und die Verriegelungsgabel 18 angeordnet. Die Kontaktfläche 12 ist beispielsweise als Messerkontakt und der Gegenkontakt 17 entsprechend als Gabelkontakt ausgebildet. In jedem Fall sind Kontaktfläche 12 und Gegenkontakt 17 komplementär zueinander ausgebildet.

In der Ruhestellung 30 in Figur 1, in der der Stromabnehmer 3 abgesenkt ist, stehen der Gegenkontakt 17 und die Kontaktfläche 12 in Kontakt miteinander, so dass eine elektrische Verbindung zwischen ihnen hergestellt ist. So ist eine elektrische Verbindung zwischen dem Stromabnehmer 3 und dem zweiten fahrzeuginternen Netz 5 und somit zur Erdung/Masse 20 hergestellt.

Weiterhin ist die Verriegelungslasche 11 in der Verriegelungsgabel 18 angeordnet. In der Verriegelungslasche 11 ist ein Durchgangsloch 21 ausgebildet, das in der Ruhestellung in Figur 1 mit einem Durchgangsloch 21 in der Verriegelungsgabel 18 fluchtet. In den fluchtenden Durchgangslöchern 21 ist in der Ruhestellung in Figur 1 ein Verriegelungsbolzen 19 angeordnet, der den Stromabnehmer 3 in der Ruhestellung formschlüssig sichert.

Im Folgenden wird die Funktion der erfindungsgemäßen Stromabnehmeranordnung 2 mit Bezug auf die Figuren 1 und 2 beschrieben.

In der Kontaktstellung 29 in Figur 2 ist eine elektrische Verbindung zwischen dem Stromabnehmer 3 und dem fahrzeugexternen Netz 8 hergestellt. Da der Stromabnehmer 3 mit dem ersten fahrzeuginternen Netz 4 verbunden ist, besteht auch eine elektrische Verbindung von dem Stromabnehmer 3 zum Energiespeicher 13, dem Wandler 14 und dem Elektromotor 15. Der Elektromotor 15 ist mit den Antriebsrädern (nicht dargestellt) des Fahrzeugs 1 verbunden, um das Fahrzeug 1 fortzubewegen. Zusätzlich kann das erste Netz 4 ein Schaltmittel 27, wie z. B. einen Schütz, aufweisen, durch den der Stromabnehmer 3 vom Zwischenkreis 28 mit Energiespeicher 13, Wandler 14 und Elektromotor 15 trennbar ist.

In Figur 1 ist der Stromabnehmer 3 in seine Ruhestellung 30 gebracht, in der er abgesenkt und der Schleifkontakt 10 von dem fahrzeugexternen Netz 8 beabstandet ist. In dieser Position kann das Fahrzeug 1 durch Energie aus dem Energiespeicher 13 oder von einem Generator 22, der von einem Verbrennungsmotor 23 betrieben wird, angetrieben wird. Der Generator 22 und der Verbrennungsmotor 23 sind Teil des Zwischenkreises 28. Das Schaltmittel 27 trennt in der Ruhestellung den Zwischenkreis 28 normalerweise vom Stromabnehmer 3. Um aber sicherzustellen, dass in den außenliegenden elektrisch leitenden Teilen des Stromabnehmers 3, wie beispielsweise dem Schleifkontakt 10, auch bei Versagen des Schaltmittels 27 keine Spannung anliegt, ist durch die Verbindung der Kontaktfläche 12 mit dem Gegenkontakt 17 eine elektrische Verbindung von der Erdung/Masse 20 zu dem Stromabnehmer 3 hergestellt. Diese Verbindung wird selbsttätig ohne zusätzliche Antriebe beim Absenken des Stromabnehmers 3 in seine Ruhestellung in Figur 1 geschlossen.

Dadurch, dass die Verriegelungsgabel 18 einen sich verjüngenden Sitz für die Verriegelungslasche 11 aufweist, wird die Verriegelungslasche 11 und damit der Stromabnehmerholm 9 in der Verriegelungsgabel 18 zentriert. Durch diese Zentrierfunktion der Verriegelungsbaugruppe 7 wird auch das Schließen der Kontaktbaugruppe 6 aus Kontaktfläche 12 und Gegenkontakt 17 gewährleistet.

Um das Erreichen der Ruhestellung 30 in Figur 1 des Stromabnehmers 3 zu erfassen, weist das Fahrzeug 1 einen Schalter 24 auf, der in Figur 1 als ein Näherungsschalter ausgebildet ist und der das Erreichen der Ruhestellung signalisiert. Bei der Ausführungsform in Figur 1 ermittelt der Schalter 24, wenn die Verriegelungslasche 11 am Stromabnehmerholm 9 einen vorbestimmten Abstand zum Schalter 24 unterschreitet. Hierdurch schaltet der Schalter 24 in eine andere Schaltposition, die entsprechend von der Fahrzeugsteuerung (nicht dargestellt) erfasst wird und beispielsweise durch ein optisches oder akustisches Signal angezeigt wird. Anstatt der Verriegelungslasche 1 kann selbstverständlich auch die Position eines anderen beweglichen Teils des Stromabnehmers 3 abgefragt werden.

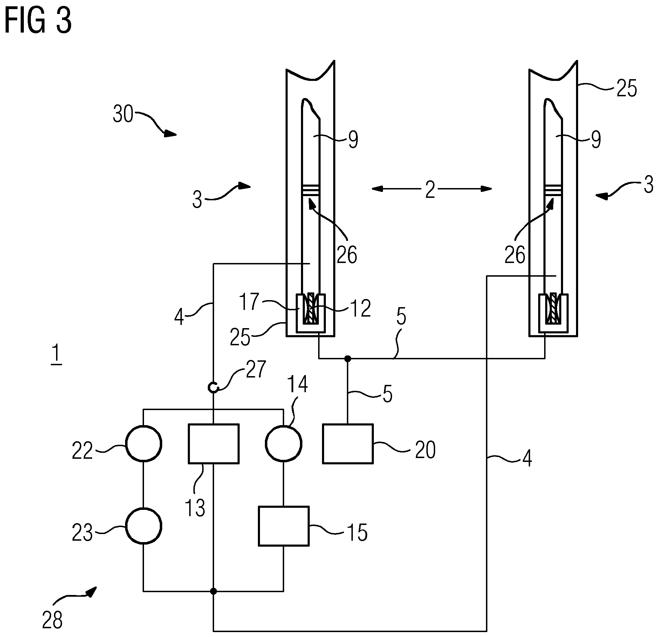

Im Folgenden wird die beispielhafte Ausführungsform der Stromabnehmeranordnung 2 in Figur 3 beschrieben. Der Einfachheit halber wird lediglich auf die Unterschiede zu der Ausführungsform der Figuren 1 und 2 eingegangen.

Der Stromabnehmer 3 der Ausführungsform in Figur 3 ist mit einem linear ausfahrbaren Stromabnehmerholm 9 ausgestaltet, der in einem feststehenden Hubportal 25 linear geführt ist. Der Stromabnehmerholm 9 kann aus diesem feststehenden Hubportal 25 ausgefahren und wieder in dieses eingefahren werden. In Figur 3 ist die Stromabnehmeranordnung 2 in Ruhestellung 30 dargestellt. Das Hubportal 25 ist beispielsweise an einer Fahrerkabine des Fahrzeugs 1 angeordnet, was hier jedoch nicht im Detail dargestellt ist. Am unteren Ende des Stromabnehmerholms 9 ist die Kontaktfläche 12 angeordnet. Wie bei der Ausführungsform in Figur 1 umfasst der Stromabnehmer 3 einen Schleifkontakt 10 oder einen ähnlichen Kontakt zum fahrzeugexternen Netz 8, der elektrisch leitend mit der Kontaktfläche 12 verbunden ist. Das Hubportal 25 weist am unteren Ende der Linearführung für den Stromabnehmerholm 9 einen gabelförmig ausgebildeten Gegenkontakt 17 auf, der komplementär zur Kontaktfläche ausgebildet ist. Folglich ist die Kontaktfläche 12 in der Ruhestellung in Figur 3 in den Gegenkontakt 17 eingefahren und hat eine elektrische Verbindung mit dem Gegenkontakt 17 hergestellt.

Wie bei der Ausführungsform in Figur 1 wird auch bei der Ausführungsform in Figur 3 in der Ruhestellung der Stromabnehmeranordnung 2 ein elektrischer Kontakt zwischen dem Stromabnehmer 3 mit dem ersten fahrzeuginternen Netz 4 und dem zweiten fahrzeuginternen Netz 5 hergestellt. Dadurch ist auch hier sichergestellt, dass der Stomabnehmer 3 in der Ruhestellung mit der Masse 20 des Fahrzeugs 1 verbunden ist.

Das Fahrzeug in Figur 3 weist zwei Stromabnehmer 3 auf. Dies soll eine zweipolige Ausgestaltung darstellen, wie sie bei einem Straßenfahrzeug, also einem Nichtschienenfahrzeug, zum Einsatz kommt. In der Ruhestellung in Figur 3 sind die Stromabnehmer 3 und die Gegenkontakte 17 miteinander verbunden.

Die Stromabnehmeranordnung 2 in Figur 3 weist an dem Stromabnehmerholm 9 eine Markierung 26 auf, die von außerhalb des Fahrzeugs 1 einsehbar ist und durch die das Erreichen der Ruhestellung der Stromabnehmeranordnung 2 erkennbar ist. Damit ist der sichere Zustand der Ruhestellung erreicht und ein gefahrloses Arbeiten in der Nähe des Stromabnehmers 3 ist möglich.

## Patentansprüche

1. Stromabnehmeranordnung (2) für ein Fahrzeug (1), mit wenigstens einem zum zumindest zeitweisen Kontakt mit einem fahrzeugexternen elektrischen Netz (8) ausgestalteten Stromabnehmer (3), der von einer Kontaktstellung (29) in eine Ruhestellung (30) bewegbar ausgestaltet ist, mit einem ersten fahrzeuginternen elektrischen Netz (4), das mit dem Stromabnehmer (3) in der Kontaktstellung (29) verbunden ist, und mit einem zweiten fahrzeuginternen elektrischen Netz (5), das mit einer Erdung (20) oder Masse (20) des Fahrzeugs (1) und in der Ruhestellung (30) mit dem Stromabnehmer (3) verbunden ist,
**dadurch gekennzeichnet, dass** der Stromabnehmer (3) in der Ruhestellung (30) mit dem ersten elektrischen Netz (4) und dem zweiten elektrischen Netz (5) verbunden ist.

2. Stromabnehmeranordnung (2) nach Anspruch 1,
**dadurch gekennzeichnet, dass** der Stromabnehmer (3) wenigstens ein Kontaktmittel (12) und das zweite fahrzeuginterne Netz (5) ein Gegenkontaktmittel (17) aufweisen, die in der Ruhestellung (30) miteinander verbunden und in der Kontaktstellung (29) voneinander getrennt sind.

3. Stromabnehmeranordnung (2) nach Anspruch 2,
**dadurch gekennzeichnet, dass** das Kontaktmittel (12) an einem sich zwischen Ruhestellung (30) und Kontaktstellung (29) bewegenden Abschnitt des Stromabnehmers (3) angeordnet ist.

4. Stromabnehmeranordnung (2) nach einem der oben genannten Ansprüche,
**dadurch gekennzeichnet, dass** die Stromabnehmeranordnung (2) wenigstens ein Schaltmittel (24) aufweist, wobei das Schaltmittel (24) in der Kontaktstellung (29) des Stromabnehmers (3) einen ersten Schaltzustand und in der Ruhestellung (30) des Stromabnehmers (3) einen zweiten Schaltzustand einnimmt.

5. Stromabnehmeranordnung (2) nach einem der oben genannten Ansprüche,
**dadurch gekennzeichnet, dass** die Stromabnehmeranordnung (2) wenigstens ein Anzeigemittel (26) aufweist, wobei das Anzeigemittel (26) in der Ruhestellung (30) des Stromabnehmers (3) einen Anzeigezustand einnimmt, der sich von einem Anzeigezustand außerhalb der Ruhestellung (30) unterscheidet.

6. Stromabnehmeranordnung (2) nach einem der oben genannten Ansprüche,
**dadurch gekennzeichnet, dass** das erste fahrzeuginterne Netz (4) zumindest zeitweise wenigstens mit einer fahrzeuginternen Energiequelle (13, 14, 15, 22, 23) verbunden ist.

7. Stromabnehmeranordnung (2) nach einem der oben genannten Ansprüche,
**dadurch gekennzeichnet, dass** die Stromabnehmeranordnung (2) wenigstens zwei zum Kontakt mit von einander verschiedenen fahrzeugexternen elektrischen Netzen ausgestaltete Stromabnehmer (3) aufweist, die in der Ruhestellung (30) elektrisch miteinander verbunden sind.

8. Fahrzeug (1) mit einer Stromabnehmeranordnung (2) nach einem der oben genannten Ansprüche.

9. Fahrzeug (1) nach Anspruch 8,
**dadurch gekennzeichnet, dass** das Fahrzeug (1) als ein nicht schienengebundenes Fahrzeug (1) ausgebildet ist.

10. Fahrzeug (1) nach Anspruch 8 oder 9,
**dadurch gekennzeichnet, dass** das Fahrzeug als ein Hybridfahrzeug mit wenigstens zwei unterschiedlichen Energiewandlern ausgebildet ist.

## Claims

1. Pantograph arrangement (2) for a vehicle (1), with at least one pantograph (3) embodied for at least temporary contact with an electrical network (8) located externally outside the vehicle, which is embodied to be movable from a contact position (29) into a rest position (30), with a first electrical network (4) located internally within the vehicle, which in the contact position (29) is connected to the pantograph (3), and with a second electrical network (5) located internally within the vehicle, which is connected to a ground (20) or mass (20) of the vehicle (1) and in the rest position (30) to the pantograph (3), **characterised in that** in the rest position (30) the pantograph (3) is connected to the first electrical network (4) and the second electrical network (5).

2. Pantograph arrangement (2) according to claim 1, **characterised in that** the pantograph (3) comprises at least one contact means (12) and the second network (5) located internally within the vehicle comprises a mating contact means (17), which in the rest position (30) are connected to each other and in the contact position (29) are isolated from each other.

3. Pantograph arrangement (2) according to claim 2, **characterised in that** the contact means (12) is arranged on a section of the pantograph (3) moving between rest position (30) and contact position (29).

4. Pantograph arrangement (2) according to one of the preceding claims, **characterised in that** the pantograph arrangement (2) comprises at least one switching means (24), wherein the switching means (24) assumes a first switching state in the contact position (29) of the pantograph (3) and a second switching state in the rest position (30) of the pantograph (3).

5. Pantograph arrangement (2) according to one of the preceding claims, **characterised in that** the pantograph arrangement (2) comprises at least one indicator means (26), wherein in the rest position (30) of the pantograph (3) the indicator means (26) assumes an indication status which differs from an indication status outside the rest position (30).

6. Pantograph arrangement (2) according to one of the preceding claims, **characterised in that** the first network (4) located internally within the vehicle is at least temporarily connected at least to an energy source (13, 14, 15, 22, 23) located internally within the vehicle.

7. Pantograph arrangement (2) according to one of the preceding claims, **characterised in that** the pantograph arrangement (2) comprises at least two pantographs (3) embodied for contact with different electrical networks located externally outside the vehicle, which in the rest position (30) are electrically connected to each other.

8. Vehicle (1) with a pantograph arrangement (2) according to one of the preceding claims.

9. Vehicle (1) according to claim 8, **characterised in that** the vehicle (1) is embodied as a non rail-borne vehicle (1).

10. Vehicle (1) according to claim 8 or 9,
**characterised in that** the vehicle is embodied as a hybrid vehicle with at least two different energy converters.

## Revendications

1. Système (2) de prise de courant pour un véhicule (1), comprenant au moins un appareil (3) de prise de courant, conformé pour le contact, au moins de temps en temps, avec un réseau (8) électrique extérieur au véhicule et mobile d'une position (29) de contact à une position (30) de repos, comprenant un premier réseau (4) électrique intérieur au véhicule, qui, en la position (29) de contact, est relié à l'appareil (3) de prise de courant, et comprenant un deuxième réseau (5) électrique intérieur au véhicule, qui est relié à une terre (20) ou à la masse (20) du véhicule (1) et qui, en la position (30) de repos, est relié à l'appareil (3) de prise de courant, **caractérisé en ce que**
l'appareil (3) de prise de courant est, en la position (30) de repos, relié au premier réseau (4) électrique et au deuxième réseau (5) électrique.

2. Système (2) de prise de courant suivant la revendication 1,
**caractérisé en ce que**
l'appareil (3) de prise de courant a au moins un moyen (12) de contact et le deuxième réseau (5) intérieur au véhicule a un moyen (17) de contact antagoniste, qui, en la position (30) de repos sont reliés entre eux et, en la position (29) de contact, sont séparés l'un de l'autre.

3. Système (2) de prise de courant suivant la revendication 2,
**caractérisé en ce que**
le moyen (12) de contact est monté sur une partie, mobile entre la position (30) de repos et la position (29) de contact, de l'appareil (3) de prise de courant.

4. Système (2) de prise de courant suivant l'une des revendications précédentes,
**caractérisé en ce que**
le système (2) de prise de courant a au moins un moyen (24) de commutation, le moyen (24) de commutation prenant, dans la position (29) de contact de l'appareil (3) de prise de courant, un premier état de commutation, et dans la position (30) de repos de l'appareil (3) de prise de courant, un deuxième état de commutation.

5. Système (2) de prise de courant suivant l'une des revendications précédentes,
**caractérisé en ce que**
le système (2) de prise de courant a au moins un moyen (26) d'affichage, le moyen (26) d'affichage prenant, dans la position (30) de repos de l'appareil (3) de prise de courant, un état d'affichage, qui se distingue d'un état d'affichage en dehors de la position (30) de repos.

6. Système (2) de prise de courant suivant l'une des revendications précédentes,
**caractérisé en ce que**
le premier réseau (4) intérieur au véhicule est relié, au moins de temps en temps, à au moins une source (13, 14, 15, 22, 23) d'énergie intérieure au véhicule.

7. Système (2) de prise de courant suivant l'une des revendications précédentes,
**caractérisé en ce que**
le système (2) de prise de courant a au moins deux appareils (3) de prise de courant, conformés pour le contact avec des réseaux électriques différents l'un de l'autre, extérieurs au véhicule, les appareils (3) étant reliés entre eux électriquement en la position (30) de repos.

8. Véhicule (1), ayant un système (2) de prise de courant suivant l'une des revendications précédentes.

9. Véhicule (1) suivant la revendication 8,
**caractérisé en ce que**
le véhicule est constitué sous la forme d'un véhicule (1) non guidé.

10. Véhicule (1) suivant la revendication 8 ou 9,
**caractérisé en ce que** le véhicule est constitué sous la forme d'un véhicule hybride, ayant au moins deux convertisseurs d'énergie différents.
